# DEMANDE DE BREVET EUROPEEN

(11) **EP 0 554 148 A1**
(43) Date de publication de la demande: **04.08.1993**
(21) Numéro de dépôt: 93400156.1
(22) Date de dépôt: 22.01.1993
(51) Int. Cl.: G10K 11/00, G01N 29/26

(54) **Dispositif pour fixer une sonde de mesure à ultrasons**

(30) Priorité: 31.01.1992 FR 9201074
(71) Demandeur: ELF ATOCHEM S.A., F-92800 Puteaux (FR)
(72) Inventeur: Daire, Sylvie, F-13220 Chateauneuf les Martigues (FR); Demets, Michel, F-13800 Istres (FR)

(57) **Abrégé**

L'invention concerne un dispositif comprenant une cale (11,12) d'épaisseur
a) pourvue de moyens (15) pour la fixer sur la paroi extérieure (18) d'un volume contenant un fluide à température élevée
b) sur laquelle on peut fixer un émetteur ou un récepteur d'ultrasons (13,14)
c) de telle sorte que la cale soit entre la paroi et l'émetteur ou le récepteur, le faisceau d'ondes traversant le radiateur.
d) la fréquence des ondes n'étant pas altérée par la cale.

## Description

La présente invention concerne un dispositif pour fixer une sonde de mesure à ultrasons.

On utilise des sondes à ultra-sons pour mesurer des débits, des niveaux, des épaisseurs ou détecter des impuretés.

Toutes ces sondes ont une température maximum d'utilisation soit pour éviter leur destruction soit pour la fiabilité et la reproductibilité de la mesure.

On a décrit dans US 4 770 038 un dispositif à ultrasons pour mesurer la hauteur d'un liquide contenu dans un bac sous pression. Il est indiqué que l'élément piezéolectrique peut être muni de moyens de refroidissement mais sans les préciser.

US 4 872 345 décrit l'utilisation d'une sonde à ultrasons pour surveiller l'épaisseur d'un réfractaire recouvrant la paroi intérieure d'un réacteur de synthèse à haute température. Cette sonde de forme tubulaire traverse la paroi du réacteur et son réfractaire, à son extrémité extérieure est fixée un transmetteur, sur la partie du tube extérieure au réacteur, sont disposées des ailettes de refroidissement.

Le brevet US 4 779 452 décrit un viscosimètre à ultrasons dont le transmetteur est fixé sur deux collecteurs disposés l'un sur l'autre. Le transmetteur est fixé au premier collecteur par un alliage étain-argent. Le deuxième collecteur de préférence en aluminium est recouvert de cuivre par électrolyse pour se souder plus facilement au premier collecteur de préférence en cuivre.

L'écho généré à l'interface des deux collecteurs et celui généré à l'interface avec le milieu qu'on veut mesurer sont traités par un calculateur pour déterminer la viscosité du milieu.

Le brevet DS 4 287 755 décrit un dispositif à ultra-sons pour traiter de l'aluminium en fusion qui est refroidi par une circulation d'eau.

On a maintenant mis au joint un dispositif beaucoup plus simple, qui peut se démonter rapidement pour être utilisé en un autre point de mesure.

La présente invention est donc un dispositif comprenant une cale d'épaisseur
a) pourvue de moyens pour la fixer sur la paroi extérieure d'un volume contenant un fluide à température élevée
b) sur laquelle on peut fixer un émetteur ou un récepteur d'ultrasons
c) de telle sorte que la cale soit entre la paroi et l'émetteur ou le récepteur, le faisceau d'ondes traversant la cale
d) la fréquence des ondes n'étant pas altérée par la cale.

Cette cale peut être de forme quelconque pourvu qu'elle puisse transmettre le faisceau d'ondes sans que la fréquence ne soit altérée.

Elle peut être de la forme d'un cube de quelques centimètres d'arètes.

La cale peut être fixée par des vis ou tout moyen contre la paroi, il suffit de prévoir des attaches, ou des oreilles. La cale se fixe facilement sur la paroi, elle peut être démontée rapidement. On peut aussi disposer de plusieurs cales fixées en différents endroits et n'avoir qu'un seul émetteur ou récepteur ou un seul émetteur et un seul récepteur, en effet l'avantage de cette cale est qu'on peut y fixer facilement et enlever quelques minutes après l'émetteur ou le récepteur pour l'utiliser dans autre endroit sur une autre cale.

Le matériau de la cale peut être conducteur ou non conducteur de la chaleur.

Si on choisit un matériau isolant l'homme de l'art détermine les dimensions de la cale pour que l'émetteur ou le récepteur soit isolé de façon suffisante de la paroi chaude.

On peut utiliser par exemple du verre.

On peut aussi choisir un matériau conducteur, dans ce cas la cale est un radiateur.

Le radiateur peut être de forme quelconque, on peut par exemple prendre un tube d'aluminium dans lequel on creuse des rayures profondes à l'extérieur pour faire des ailettes en forme de disques perpendiculaires à l'axe du cylindre puis creuser l'une des extrémités de ce cylindre pour faire une cavité destinée à recevoir l'émetteur ou le récepteur.

Le radiateur ainsi obtenu est plaqué de son côté non creusée contre la paroi, l'axe du cylindre pouvant être perpendiculaire à la paroi, l'émetteur ou le récepteur étant disposé dans la partie creusée du cylindre.

L'avantage du radiateur est qu'on peut dissiper de la chaleur mais on conduit aussi de la chaleur vers la sonde à ultrasons.

L'homme du métier peut choisir la solution adaptée aux différentes sondes et aux différentes températures de paroi.

L'invention est particulièrement utile pour les sondes à ultra-sons qu'on utilise pour mesurer les débits sur des tuyaux à haute température.

Cette technique est décrite dans KIRK-OTHMER Encyclopedia of Chemical Technology, 3^{ème} édition, supplément vol. pages 489-490. On dispose un émetteur contre la paroi extérieure d'un tuyau et diamétralement opposé selon une section du tuyau perpendiculaire à son axe, on dispose le récepteur.

On peut ainsi relier les deux cales l'une à l'autre et serrer pour les fixer contre le tuyau. On peut relier les deux cales par des tiges filetées, des câbles, des cerclages. On ne sortirait pas du cadre de l'invention si l'émetteur et le récepteur étaient dans le même plan passant par l'axe du tuyau sans être diamétralement opposés mais situés de chaque côté du tuyau.

Le dispositif de l'invention est utile aussi pour les tuyaux calorifugés, il suffit de prévoir une ouverture dans le calorifuge pour fixer une cale d'une épaisseur sensiblement égale à l'épaisseur de calorifuge ou d'une épaisseur permettant la fixation de l'émetteur ou du récepteur.

La figure 1 représente l'utilisation de deux dispositifs selon l'invention pour mesurer un débit dans un tuyau. 10 représente le tuyau, 11 et 12 sont les cales (dans ce cas des radiateurs à ailettes en aluminium) 13 et 14, l'émetteur et le récepteur d'ultrasons, 15 et 16 des plaques pour tenir l'ensemble par les tiges filetées 17.

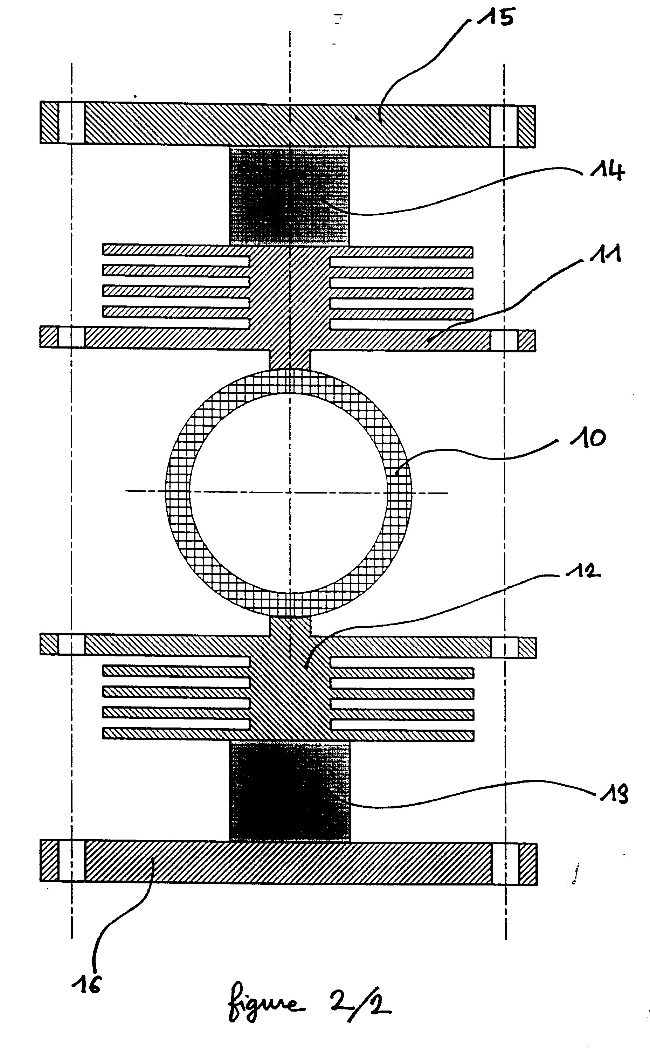

La figure 2 est une vue en coupe de la figure 1.

La demanderesse a découbert qu'on pouvait obtenir des mesures fiables et reproductibles malgré une perte d'énergie dans les cales pourvu que la fréquence soit conservée.

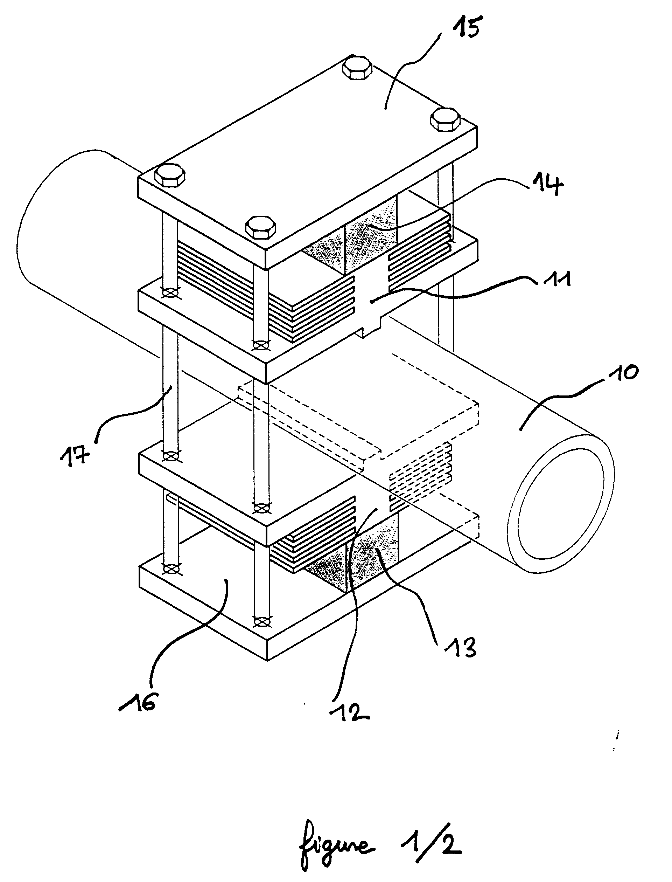

Exemple : On a utilisé le dispositif de la figure 1 pour mesurer dans un tuyau de diamètre extérieur 60 mm, épaisseur 6 mm, le débit d'une phase liquide composée essentiellement de 1-2dichloroéthane, de lourds organiques et de coke. L'émetteur et le récepteur étaient des sondes de marque POLYSONICS modèle MST-P.

Ces sondes ne supportent pas plus de 150°C. Les cales 11 et 12 étaient d'épaisseur 25 mm et les axes des tiges filetées formaient un rectangle de 105 X 50 mm.

La température de la paroi extérieure du tuyau mesurée par infra rouge était 180°C, la température au niveau des sondes mesurée par infra rouge était 85°C.

## Revendications

1. dispositif comprenant une cale d'épaisseur
a) pourvue de moyens pour la fixer sur la paroi extérieure d'un volume contenant un fluide à température élevée
b) sur laquelle on peut fixer un émetteur ou un récepteur d'ultrasons
c) de telle sorte que la cale soit entre la paroi et l'émetteur ou le récepteur, le faisceau d'ondes traversant la cale
d) la fréquence des ondes n'étant pas altérée par la cale.

2. Arrangement comprenant deux dispositifs selon la revendication 1 fixés autour du tuyau tel que l'émetteur et le récepteur sont dans une section perpendiculaire à l'axe du tuyau et diamétralement opposés.

3. Arrangement comprenant deux dispositifs selon la revendication 1 fixés autour d'un tuyau tel que l'émetteur et le récepteur sont dans un même plan passant par l'axe du tuyau et situés de chaque côté du tuyau.

4. Utilisation des arrangements selon les revendications 2 ou 3 pour mesurer des débits.
